# EUROPÄISCHE PATENTSCHRIFT

(11) **EP 2 834 083 B1**
(45) Veröffentlichungstag und Bekanntmachung des Hinweises auf die Patenterteilung: **31.10.2018**
(21) Anmeldenummer: 13708765.6
(22) Anmeldetag: 01.03.2013
(51) Int. Cl.: B60B 27/00, F16D 1/076, F16D 3/223

(54) **RADNABEN-DREHGELENK-ANORDNUNG**
WHEEL HUB ROTARY JOINT ARRANGEMENT
ENSEMBLE MOYEU DE ROUE ET JOINT ROTATIF

(30) Priorität: 05.04.2012 DE 102012205727
(43) Veröffentlichungstag der Anmeldung: 11.02.2015
(73) Patentinhaber: Bayerische Motoren Werke Aktiengesellschaft, 80809 München (DE)
(72) Erfinder: DUDKOWIAK, Johann, 82343 Poecking (DE); GINGLAS, Eduard, 86497 Horgau-Auerbach (DE)
(86) Internationale Anmeldenummer: PCT/EP2013/054145
(87) Internationale Veröffentlichungsnummer: WO 2013/149774

(56) Entgegenhaltungen:
- EP-A2- 2 045 100
- DE-A1-102005 018 127
- DE-A1-102006 030 478
- DE-A1-102008 029 253
- DE-B4-102005 054 283
- DE-C1- 3 116 720

## Beschreibung

Die vorliegende Erfindung betrifft eine Radnaben-Drehgelenk-Anordnung nach dem Oberbegriff des Anspruchs 1 und nimmt direkt auf die DE 10 2005 054 283 B4 und auf die DE 31 16 720 C1 Bezug. Weiterhin wird zum Stand der Technik auf die DE 34 30 067 C2 und die DE 10 2005 054 285 B4 sowie auf die EP 2 045 100 A2 verwiesen.

In den beiden erstgenannten Schriften ist eine grundsätzlich vorteilhafte Verbindung zwischen verallgemeinert einer Radnaben-Einheit und einer zugeordneten Antriebswelle für ein Kraftfahrzeug beschrieben. Bislang üblicher Stand der Technik war hierfür eine sog. Zapfenverbindung mit Keilverzahnung, so wie dies beispielswiese in der oben weiterhin genannten DE 34 30 067 C2 gezeigt ist. Die Montage der Antriebswelle an der Radnaben-Einheit kann demgegenüber deutlich vereinfacht werden, wenn zwischen diesen beiden Bauelementen eine Stirnverzahnung vorgesehen ist, so wie dies erstmals in der o.g. DE 31 16 720 C1 gezeigt wurde. In dieser soeben genannten frühen Anmeldung ist auch bereits vorgeschlagen, dass die der Radnabe zugewandte Stirnseite der Antriebswelle, die durch einen Gelenkkörper gebildet ist, der vorliegend als Gelenkaußenteil eines Gleichlaufdrehgelenks bezeichnet ist, und auf den die besagte Stirnverzahnung aufgebacht ist, tellerförmig gewölbt ist. Gleichzeitig beschreibt diese alte Schrift DE 31 16 720 C1 bereits, dass die Gegenfläche der Radnabe, auf die die zur Stirnverzahnung der Antriebswelle komplementäre Stirnverzahnung aufgebracht ist, solchermaßen ausgebildet ist, dass die Stirnverzahnung bei der Montage zuerst am Außendurchmesser trägt und erst anschließend infolge elastischer Verformung an der Stirnseite des äußeren Gelenkkörpers aufgrund der Vorspannung eines Bolzens, der in der vorliegenden Erfindung als Verspannmittel zum axialen Verspannen der Radnabe mit dem Gelenkaußenteil bezeichnet ist, auf der ganzen Fläche.

In der eingangs weiterhin genannten DE 10 2005 054 283 B4 ist der soeben geschilderte Sachverhalt in etwas anderen Worten nochmals ausführlich beschrieben und stellt dabei ein wesentliches Merkmal des erteilten Patentanspruchs 1 dieser DE 10 2005 054 283 B4 dar.

Für die Beschreibung der vorliegenden Erfindung wird ausdrücklich auf diese soeben genannte DE 10 2005 054 283 B4 Bezug genommen, auch indem vorliegend die gleichen Begriffe für die gleichen Bauelemente verwendet werden. Da hiermit für die grundlegende Beschreibung einer erfindungsgemäßen Radnaben-Drehgelenk-Anordnung auf diese DE 10 2005 054 283 B4 zurückgegriffen werden kann, werden deren einzelne Bauelemente im weiteren auch nicht detailliert beschrieben; vielmehr wird hierzu vollumfänglich auf die besagte DE 10 2005 054 283 B4 verwiesen.

Folglich wird im Weiteren zunächst nur auf die erfindungswesentlichen Unterschiede zwischen der DE 10 2005 054 283 B4 und der vorliegenden Erfindung eingegangen. Diese resultieren aus der der vorliegenden Erfindung zugrunde liegenden Aufgabe, nämlich eine Maßnahme aufzuzeigen, mit Hilfe derer eine bei einer Radnaben-Drehgelenk-Anordnung gemäß dem aus der DE 31 16 720 C1 und der DE 10 2005 054 283 B4 bekannten Stand der Technik auftretende nachteilige Erscheinung verhindert werden kann. Es hat sich nämlich gezeigt, dass es mit sinnvoller Auslegung des Gelenkaußenteils und/oder des Hülsenabschnitts der Radnabe nicht möglich ist, diese besagten Bauteile solchermaßen zu gestalten, dass diese einerseits ausreichend massiv und steif sind um die zu übertragenden hohen Drehmomente auch tatsächlich aufnehmen bzw. übertragen zu können, und anderseits derart elastisch zu gestalten, dass im Rahmen des axialen Verspannens die gewünschte Verformung, die erforderlich ist, um ein Tragen der Stirnverzahnung im wesentlichen vollflächig auf den einander zugewandten Zähnen zu erreichen, erreicht wird. Vielmehr sind mit dem bekannten Stand der Technik parktisch nur sog. "Außenträger" erzielbar, das heißt Stirnverzahnungs-Paarungen, die nur in einem radial außenliegenden Abschnitt tragen.

Zur Lösung dieser Aufgabe sind die im kennzeichnenden Teil des Anspruchs 1 angegebenen Merkmale vorgeschlagen; vorteilhafte Weiterbildungen sind Inhalt der Unteransprüche.

Erfindungsgemäß wird gegenteilig zum bekannten Stand der Technik vorgegangen und es sind die Stirnverzahnungen derart gestaltet, dass die ersten und zweiten Zähne beim axialen Verspannen der Anordnung in Radialrichtung betrachtet zunächst radial innen und mit zunehmendem Verspannen auch radial außen miteinander in Anlage kommen. Für die Fachwelt völlig überraschend und somit in erfinderischer Weise wurde vorliegend erkannt, dass ein tragender Kontakt zwischen den einander zugewandten Zahnflächen der Zähne am Gelenkaußenteil des Gleichlaufgelenks einerseits und am Hülsenabschnitt der Radnabe andererseits über einem Großteil der Fläche und insbesondere sowohl in einem radial äußeren Bereich dieser Zahnflächen als auch in einem radial inneren Bereich der Zahnflächen erzielt werden kann, wenn die einander zugewandten Zahnflächen beim axialen Verspannen zunächst im radial inneren Bereich aneinander zum Anliegen kommen und erst im Zuge der weiteren Verspannung, d.h. mit Erhöhung der Spannkraft durch elastische Verformung auch im radial äußeren Bereich aufeinander zum Liegen kommen.

Damit die Stirnverzahnungen beim Herstellen der Verzahnungspaarung vom Hülsenabschnitt der Radnabe und vom Gelenkaußenteil des Gleichlaufdrehgelenks im Zuge des Ineinander-Legens und des anschließenden Verspannens anfänglich, d.h. zunächst in einem radial weiter innen liegenden Bereich und mit weiterem Verspannen auch in radial weiter außen liegenden Bereichen aneinander zum Anliegen kommen, ist - so wie dies bereits in der DE 31 16 720 C1 beschrieben ist - zumindest eine der Stirnflächen der Verzahnungspaarung, d.h. die mit der Stirnverzahnung versehene Stirnfläche des besagten Gelenkaußenteils und/oder die mit der Stirnverzahnung versehene Stirnfläche des besagten Hülsenabschnitts geringfügig gewölbt, wobei diese Wölbung bei der vorliegenden Erfindung konvex ist, während sie beim Stand der Technik konkav, d.h. tellerförmig ist. Dabei ist es ausreichend, wenn nur eine der die besagte Verzahnungspaarung bildenden Stirnverzahnungen bzw. deren zugehörige Bauteil-Stirnseite oder deren die Zähne aufweisende Teilstruktur (bspw. diejenige des Gelenkaußenteils) geringfügig konvex geformt ist, während die Stirnseite bzw. die die Zähne aufweisende Teilstruktur des anderen Bauteils (im genannten Beispiel also die der Radnabe) eben, d.h. planar ist.
Zwar ist aus der eingangs letztgenannten EP 2 045 100 A2 ebenfalls eine Radnaben-Drehgelenk-Anordnung mit ineinander greifenden Stirnverzahnungen bekannt, von denen eine eine konvex gewölbte Stirnfläche aufweist, jedoch ist bei dieser bekannten Anordung die Stirnfläche der anderen damit zusammenwirkenden Stirnfläche hieran angepasst konkav gewölbt. Der technologische Hintergrund, weshalb die Stirnflächen bei dieser bekannten Anordnung konvex bzw. konkav gewölbt sind, ist auch ein ganz anderer als bei der vorliegenden Erfindung, weswegen nicht die soeben genannte EP 2 045 100 A2, sondern die beiden eingangs erstgenannten Schriften, die sich mit dem gleichen technologischen Hintergrund wie die vorliegende Erfindung befassen, als nächstkommender Stand der Technik erachtet werden.
Um die weiter oben beschriebene elastische Verformung im Verlauf des weiteren Verspannens der Verzahnungspaarung solchermaßen (wie gewünscht) darzustellen, dass ausgehend von den zunächst nur in einem radial weiter innen liegenden Bereich aufeinander aufliegenden Zähnen diese mit zunehmendem Verspannen gegeneinander auch in radial weiter außen liegenden Bereichen tragend aneinander zum Anliegen kommen, ist eine die Zähne aufweisende Teilstruktur des Hülsenabschnitts und/oder des Gelenkaußenteils in einem radial weiter innen liegenden Bereich leichter deformierbar ausgebildet als in einem radial weiter außen liegenden Bereich. Vorteilhafterweise kann damit derjenige Bereich der Verzahnungspaarung, in dem der größere Anteil des über diese Stirnverzahnungs-Paarung von der Antriebswelle zur Radnabe zu übertragenden Drehmoments zwischen den Zähnen übertragen wird und der wegen des größeren Hebelarms der radial äußere Bereich der Stirnverzahnung ist, besonders steif und massiv gestaltet werden, was im genannten Stand der Technik (DE 31 16 720 A1 sowie DE 10 2005 054 283 B4) nicht möglich ist, da sich bei diesem Stand der Technik dieser radial äußere Bereich elastisch verformen muss, damit sich ein sog. "Vollträger" und nicht nur ein in der vorliegenden Beschreibung des Standes der Technik genannter "Außenträger" ergibt.

Grundsätzlich bestehen verschiedene Möglichkeiten, wie eine die Zähne aufweisende Teilstruktur der Radnabe bzw. von deren Hülsenabschnitt und/oder des Gelenkaußenteils in einem radial weiter innen liegenden Bereich leichter deformierbar ausgebildet sein kann als in einem radial weiter außen liegenden Bereich. So kann die leichtere Deformierbarkeit der die Zähne aufweisenden Teilstruktur im radial weiter innen liegenden Bereich durch eine geeignete Formgebung und somit durch eine geringere Steifigkeit dieses Bereichs oder durch eine geringere Festigkeit, insbesondere Härte der die Zähne aufweisenden Teilstruktur im radial weiter innen liegenden Bereich, jeweils gegenüber der Steifigkeit oder Festigkeit in einem radial weiter außen liegenden Bereich betrachtet, dargestellt sein.

In einer erfindungsgemäßen Radnaben-Drehgelenk-Anordnung kann die Steifigkeit und/oder Festigkeit der die Zähne tragenden Teilstruktur(en) solchermaßen gestaltet sein, dass sich in Radialrichtung über der Länge der Zähne betrachtet ein Traganteil von zumindest 70% ergibt, d.h. die einander zugewandten Zahnflächen liegen im fertig montierten und gemäß den Montagevorschriften vollständig gegeneinander verspannten Zustand in Radialrichtung betrachtet über zumindest 70% der Länge tragend aneinander an.

Gemäß einem auch in einer der beigefügten Figuren beschriebenen Ausführungsbeispiel für eine erfindungsgemäße Radnaben-Drehgelenk-Anordnung kann die unterschiedliche Festigkeit durch Weichglühen des radial weiter innen liegenden Bereichs im Anschluss an die spanlose Formgebung der somit kaltverfestigten Stirnverzahnung dargestellt sein, d.h. nach dem Herstellen der Stirnverzahnung beispielsweise im Gelenkaußenteil durch Kaltumformen, bspw. durch Taumeln oder Pressen, kann ein radial innerer Abschnitt der die Zähne aufweisenden Teilstruktur weichgeglüht werden. Alternativ kann dann, wenn die die Zähne aufweisende Teilstruktur des Gelenkaußenteils und/oder der Radnabe eine gewisse Weichheit besitzt und somit gesamthaft durch das Verspannen geringfügig verformbar ist, der radial weiter außen liegende Bereich dieser Teilstruktur gehärtet werden, damit dieser radial weiter außen liegende Bereich erfindungsgemäß weniger leicht verformbar ist als der radial weiter innen liegende Bereich der besagten Teilstruktur.

Gemäß einem weiteren auch in einer der beigefügten Figuren beschriebenen Ausführungsbeispiel für eine erfindungsgemäße Radnaben-Drehgelenk-Anordnung kann die die Zähne aufweisende Teilstruktur im radial weiter innen liegenden Bereich eine Hinterschneidung aufweisen. Eine solche Hinterschneidung bzw. ein solcher Hinterschnitt bspw. in Form eines spanend hergestellten Freistichs oder einer beim Formen der Stirnverzahnung mitgeformten Aussparung führt dazu, dass sich die die Zähne aufweisende Teilstruktur im hinterschnittenen, radial weiter innen liegenden Teilbereich beim Verspannen der Verzahnungspaarung geringfügig vom Verzahnungs-Partner, d.h. vom anderen Bauteil weg verbiegen kann, so dass als Folge hiervon die Zähne der Stirnverzahnungen auch im radial weiter außen liegenden Bereich tragend aufeinander zum Anliegen kommen. Im übrigen ist eine solche Ausgestaltung mit einer Hinterschneidung beispielsweise auch dadurch darstellbar, dass eine die Zähne aufweisende Teilstruktur ein zunächst vom jeweiligen Bauteil, d.h. vom Gelenkaußenteil oder der Radnabe unabhängig hergestelltes Bauteil ist, welches daraufhin mit diesem Bauteil solchermaßen (beispielsweise stoffschlüssig) verbunden wird, dass sich dabei eine entsprechende Hinterschneidung ergibt. Allgemein sei noch darauf hingewiesen, dass die hier beschriebenen verschiedenen Ausführungsformen durchaus miteinander kombiniert umgesetzt sein können.

Gemäß einem weiteren Ausführungsbeispiel kann die in Radialrichtung unterschiedliche Steifigkeit der die Zähne aufweisenden Teilstruktur dadurch dargestellt sein, dass sich die über dem Umfang verteilt angeordneten Zähne zumindest einer der miteinander zusammenwirkenden Stirnverzahnungen in Radialrichtung betrachtet nicht allesamt gleichweit zur Drehachse (des Gelenkaußenteils oder der Radnabe) hin erstrecken. Dies führt dazu, dass beim Zusammenfügen der Verzahnungspaarung zunächst nicht sämtliche Zähne, sondern nur ein Teil der gesamthaft vorgesehenen Zähne zum Tragen kommt. Damit verteilt sich beim Verspannen der Radnabe mit dem Gelenkaußenteil die vom Verspannmittel eingeleitete Spannkraft anfänglich auf weniger Zähne als am Ende des Verspannvorgangs. Anteilig wirkt somit anfänglich auf jeden der an einem Gegen-Zahn im radial weiter innen liegenden Bereich anliegenden Zähne eine höhere Kraft ein, die der gewünschten anfänglichen Verformung des radial weiter innen liegenden Bereichs förderlich ist.

Verallgemeinert lässt sich diese Ausführungsform auch so beschreiben, dass die über dem Umfang verteilt angeordneten Zähne der Stirnverzahnung solchermaßen gestaltet sind, dass beim Fügen der Verzahnungspaarung zu Beginn des Verspannens lediglich eine Teilmenge der ersten Zähne der ersten Stirnverzahnung mit den zugeordneten Zähnen der zweiten Stirnverzahnung in Kontakt kommt. Dies ist beispielsweise auch dadurch darstellbar, dass die sich gleich weit zur Drehachse hin erstreckenden Zähne in einem radial weiter innen liegenden Bereich unterschiedlich breit geformt sind, so dass beim Zusammenfügen der Verzahnungspartner ohne Verspannen nur einige und nicht sämtliche der einander zugeordneten Zähne aneinander zum Anliegen kommen.

Eine weitere vorteilhafte Weiterbildung baut auf der eingangs weiterhin genannten DE 10 2005 054 285 B4 auf bzw. stellt eine erfinderische Abwandlung davon dar, die in besonders günstiger Weise an eine Radnaben-Drehgelenk-Anordnung nach einem der Ansprüche 1 - 6 angepasst ist. Es hat sich nämlich in überraschender Weise gezeigt, dass mit einer erfindungsgemäßen Radnaben-Drehgelenk-Anordnung wohl aufgrund der gegenüber der DE 10 2005 054 283 B4 gleichmäßigeren bzw. großflächigeren Kraft- bzw. Momenten-Übertragung zwischen den Zähnen der Stirnverzahnung eine ausreichende Drehsteifigkeit und Biegesteifigkeit bei vorteilhafterweise gleichzeitigem reduzierten Bauraum-Bedarf dann möglich ist, wenn das in der DE 10 2005 054 285 B4 ausführlich beschriebene Verhältnis aus der axialen Länge der Radlagerung und dem mittlerem Durchmesser der Stirnverzahnung gleich oder größer als 0,63 ist. Dabei sind vorliegend, ebenso wie eingangs bezüglich der DE 10 2005 054 283 B4 beschrieben, abermals die gleichen Begriffe für die gleichen Bauelemente und Abmessungen verwendet, wie bei der nun relevanten DE 10 2005 054 285 B4. Im übrigen sind in diesen beiden genannten Schriften, nämlich DE 10 2005 054 283 B4 und DE 10 2005 054 285 B4, die den gleichen Anmelder und den gleichen Anmeldetag besitzen, ebenfalls gleiche Bauelemente mit den gleichen Begriffen benannt. Daher kann auch vermutet werden, dass das durch die DE 10 2005 054 285 B4 patentierte Merkmal des besagten Durchmesser-Verhältnisses, welches kleiner als 0,63 sein soll, auch nur für eine Radnaben-Drehgelenk-Anordnung nach der DE 10 2005 054 283 B4 Gültigkeit haben kann. Hingegen ist für eine in der vorliegenden Erfindung beschriebene Radnaben-Drehgelenk-Anordnung auch ein anderes Durchmesserverhältnis, nämlich gleich oder größer 0,63 vorteilhaft, indem damit sowohl eine ausreichende Steifigkeit erzielt werden kann als auch eine besonders kompakte, nur relativ wenig Bauraum beanspruchende Anordnung geschaffen werden kann.

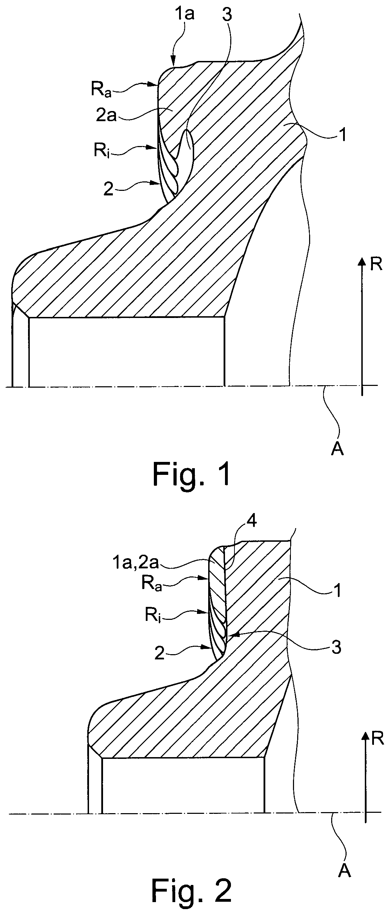

Im weiteren werden die beigefügten und weiter oben bereits kurz angesprochenen Figuren 1, 2 beschrieben, die jeweils einen Teilschnitt eines erfindungsgemäß gestalteten Gelenkaußenteils 1 einer erfindungsgemäßen Radnaben-Drehgelenk-Anordnung mit der Drehachse A zeigen. In diesen Figuren nicht dargestellt sind die weiteren Elemente oder Bauelemente aus dem Oberbegriff des Anspruchs 1, da diese im wesentlichen analog dem genannten und beschriebenen Stand der Technik, insbesondere analog der DE 10 2005 054 283 B4, die hierfür die gleichen Bezeichnungen bzw. Begriffe verwendet, gestaltet sind bzw. gestaltet sein können. Selbstverständlich können nicht erfindungswesentliche Merkmale sowie Merkmale, die in den vorliegenden Unterlagen nicht beschrieben sind, dabei auch andersartig als in diesem Stand der Technik ausgeführt sein.

Mit der Bezugsziffer 2a ist der sich auf einer sog. Teilstruktur 1a dieses Gelenkaußenteils 1 befindende und im gezeigten Teilschnitt "geschnittene" Zahn einer Stirnverzahnung 2 gekennzeichnet. In Umfangsrichtung bezüglich der Drehachse A befinden sich vor und wie sichtbar hinter diesem "geschnittenen" Zahn 2a weitere Zähne, die gesamthaft die sich auf der Teilstruktur 1a befindende Stirnverzahnung 2 (wie im genannten Stand der Technik gezeigt) bilden. Jeder Zahn 2a dieser Stirnverzahnung 2 erstreckt sich im wesentlichen in Radialrichtung R, um ein gewisses Maß von der Drehachse A beabstandet ausgehend von einem radial weiter innen liegenden Bereich in der direkten Umgebung des Radius Rᵢ nach außen bis in einen radial weiter außen liegenden Bereich in der direkten Umgebung des Radius Rₐ.

Beim Ausführungsbeispiel nach Figur 1 weist die die Zähne aufweisende Teilstruktur 1a im radial weiter innen liegenden Bereich (Rᵢ) eine Hinterschneidung 3 auf, die entweder spanlos und vorzugsweise zusammen mit dem Formen der Stirnverzahnung 2 oder nachträglich spanend hergestellt wurde. Beim Ausführungsbeispiel nach Figur 2 ist die die Zähne 2a aufweisende Teilstruktur 1a ein eigenständiges, zunächst vom Gelenkaußenteil 1 unabhängiges Bauteil, welches mit dem Gelenkaußenteil 1 über eine Schweißverbindung 4 verbunden und solchermaßen geformt ist, dass im zusammengesetzten Zustand die Teilstruktur 1a relativ zum Gelenkaußenteil 1 im radial weiter innen liegenden Bereich (Rᵢ) eine Hinterschneidung 3 aufweist. Bei beiden figürlich dargestellten Ausführungsbeispielen bewirkt diese Hinterschneidung 3, dass die die Zähne 2a bzw. die Stirnverzahnung 2 aufweisende Teilstruktur 1a des Gelenkaußenteils 1 im radial weiter innen liegenden Bereich (Rᵢ) durch das besagte Verspannen mittels eines Verspannmittels leichter deformierbar ausgebildet ist als in einem radial weiter außen liegenden Bereich (Rₐ).

Ein weiterer Vorteil einer erfindungsgemäßen Radnaben-Drehgelenk-Anordnung ergibt sich daraus, dass bei solchen Stirnverzahnungs-Paarungen die einzelnen Zähne in einem radial weiter innen liegenden Bereich im Zahnkopf-Bereich nicht nur schmäler sondern auch exakter, d.h. passgenauer ausgeführt werden können als in einem radial weiter außen liegenden Bereich, wo größere Toleranzen vorzusehen sind und die Zahnkopf-Fläche in Umfangsrichtung betrachtet etwas breiter ist. Indem erfindungsgemäß beim Zusammenfügen des Gleichlaufdrehgelenks mit der Radnabe die ersten und zweiten Zähne zunächst radial innen aneinander zum Anliegen kommen, ist die Gefahr, dass beim Aufeinander-zu-Bewegen dieser beiden Bauteile in Richtung der Drehachse die ersten Zähne mit ihren Köpfen exakt auf den Köpfen der zweiten Zähne (und nicht in einem Zahnlücke-Bereich der zweiten Zähne) zum Liegen kommen, geringer als im Stand der Technik. Wenn im Stand der Technik vor dem Zusammenfügen zwischen dem Gleichlaufdrehgelenk und der Radnabe eine solche ungünstige Position relativ zueinander in Umfangsrichtung betrachtet vorliegt, so kann jedenfalls kein automatisches Verspannen durchgeführt werden, da dann lediglich die jeweiligen Zahnköpfe der beiden Stirnverzahnungen gegeneinander verspannt würden. Wie ausgeführt ist diese Gefahr bei einer erfindungsgemäßen Radnaben-Drehgelenk-Anordnung geringer, da die Zahnköpfe im radial innenliegenden Bereich etwas schmäler und insbesondere passgenauer ausgeführt sein können, so dass sich eine erfindungsgemäßen Radnaben-Drehgelenk-Anordnung beim Zusammenfügen der beiden Stirnverzahnungen quasi selbst zentriert.

## Patentansprüche

1. Radnaben-Drehgelenk-Anordnung mit einer Drehachse (A), umfassend
(a) eine Radnabe mit einem Radflansch zum Anschließen eines Rades und einem Hülsenabschnitt zur Aufnahme einer Radlagerung;
(b) ein Gleichlaufdrehgelenk mit einem Gelenkaußenteil (1), einem Gelenkinnenteil und drehmomentübertragenden Elementen;
wobei das Gelenkaußenteil (1) an seinem der Radnabe zugewandten Ende eine erste Stirnverzahnung (2) mit ersten Zähnen (2a) aufweist und der Hülsenabschnitt an seinem dem Gleichlaufdrehgelenk zugewandten Ende eine zweite Stirnverzahnung mit zweiten Zähnen aufweist, und wobei die beiden Stirnverzahnungen zur Drehmomentübertragung ineinandergreifen;
(c) Verspannmittel zum axialen Verspannen der Radnabe mit dem Gelenkaußenteil, die einerseits an der Radnabe und andererseits an dem Gelenkaußenteil axial abgestützt sind;
wobei zumindest eine der beiden Stirnflächen der durch die beiden Stirnverzahnungen gebildeten Verzahnungspaarung geringfügig gewölbt ausgeführt und damit derart gestaltet ist, dass die ersten und zweiten Zähne (2a) beim axialen Verspannen der Anordnung in Radialrichtung betrachtet zunächst nur an einer kleinen Teilfläche der einander zugewandten Zahnflächen miteinander in Anlage kommen und sich diese Teilfläche beim weiteren Verspannen vergrößert, **dadurch gekennzeichnet, dass** entweder beide Stirnflächen konvex gewölbt sind ist oder nur eine Stirnfläche konvex gewölbt und die andere Stirnfläche eben ist, womit jeweils die Stirnverzahnungen (2) derart gestaltet sind, dass die ersten und zweiten Zähne (2a) beim axialen Verspannen der Anordnung in Radialrichtung betrachtet zunächst radial innen und mit zunehmendem Verspannen auch radial außen durch elastische Verformung tragend miteinander in Anlage kommen, wofür eine die Zähne (2a) aufweisende Teilstruktur (1a) des Hülsenabschnitts und/oder des Gelenkaußenteils (1) in einem radial weiter innen liegenden Bereich (Rᵢ) leichter deformierbar ausgebildet ist als in einem radial weiter außen liegenden Bereich (Rₐ).

2. Radnaben-Drehgelenk-Anordnung nach Anspruch 1, **dadurch gekennzeichnet, dass** die leichtere Deformierbarkeit der die Zähne (2a) aufweisenden Teilstruktur (1a) im radial weiter innen liegenden Bereich (Rᵢ) durch eine geeignete Formgebung und somit durch eine geringere Steifigkeit dieses Bereichs oder durch eine geringere Festigkeit, insbesondere Härte der die Zähne aufweisenden Teilstruktur (1a) im radial weiter innen liegenden Bereich (Rᵢ), jeweils gegenüber der Steifigkeit oder Festigkeit in einem radial weiter außen liegenden Bereich (Rₐ)betrachtet, dargestellt ist

3. Radnaben-Drehgelenk-Anordnung nach einem der vorangegangenen Ansprüche, **dadurch gekennzeichnet, dass** die unterschiedliche Festigkeit durch Weichglühen des radial weiter innen liegenden Bereichs (Rᵢ) im Anschluss an die spanlose Formgebung der Stirnverzahnung (2) dargestellt ist.

4. Radnaben-Drehgelenk-Anordnung nach einem der vorangegangenen Ansprüche, **dadurch gekennzeichnet, dass** die die Zähne (2a) aufweisende Teilstruktur (1a) im radial weiter innen liegenden Bereich (Rᵢ) eine Hinterschneidung aufweist.

5. Radnaben-Drehgelenk-Anordnung nach einem der vorangegangenen Ansprüche, wobei die in Radialrichtung (R) unterschiedliche Steifigkeit der die Zähne (2a) aufweisenden Teilstruktur (1a) dadurch dargestellt ist, dass die über dem Umfang verteilt angeordneten Zähne (2a) der Stirnverzahnung (2) solchermaßen gestaltet sind, dass beim Fügen der Verzahnungspaarung zu Beginn des Verspannens lediglich eine Teilmenge der ersten Zähne (2a) der ersten Stirnverzahnung (2) mit den zugeordneten Zähnen der zweiten Stirnverzahnung in Kontakt kommt.

6. Radnaben-Drehgelenk-Anordnung nach einem der vorangegangenen Ansprüche, mit einer zweireihige Radlagerung zum drehbaren Lagern der Radnabe mit einem von der Radnabe separat ausgebildeten Lagerinnenring, der durch einen am Hülsenabschnitt ausgebildeten umgeformten Bund axial verspannt ist; wobei das Gleichlaufdrehgelenk neben dem Gelenkaußenteil ein Gelenkinnenteil und drehmomentübertragenden Kugeln aufweist, **dadurch gekennzeichnet, dass** das Verhältnis aus der axialen Länge der Radlagerung und dem mittlerem Durchmesser der Stirnverzahnung gleich oder größer als 0,63 ist.

## Claims

1. A wheel hub rotary joint arrangement with an axis of rotation (A), comprising
(a) a wheel hub with a wheel flange for connecting a wheel, and a sleeve portion for receiving a wheel bearing;
(b) a constant-velocity rotary joint with an outer joint part (1), an inner joint part, and torque-transmitting elements;
wherein the outer joint part (1) has a first spur gearing portion (2) with first teeth (2a) at its end facing the wheel hub, and the sleeve portion has a second spur gearing portion with second teeth at its end facing the constant-velocity rotary joint, and wherein the two spur gearing portions mesh with one another for torque transmission;
(c) clamping means for axially clamping the wheel hub against the outer joint part, said clamping means being supported axially on one side on the wheel hub and on the other side on the outer joint part;
wherein at least one of the two end faces of the gearing pairing formed by the two spur gearing portions is slightly curved and is thus formed in such a way that the first and second teeth (2a), with axial clamping of the arrangement, as considered in the radial direction contact one another initially only over a small area of the tooth surfaces facing towards one another, and this area increases in size with further clamping, **characterised in that** either both end faces are convexly curved or just one end face is convexly curved and the other end face is flat, whereby the spur gearing portions (2) are each formed in such a way that the first and second teeth (2a), with axial clamping of the arrangement, as considered in the radial direction contact one another in a supporting manner initially on the radially inward side and, as clamping increases, also on the radially outward side by elastic deformation, for which purpose a substructure (1a) of the sleeve portion and/or of the outer joint part (1) comprising the teeth (2a) is designed to be more easily deformable in a region (Ri) lying further radially inward than in a region (Ra) lying further radially outward.

2. A wheel hub rotary joint arrangement according to claim 1, **characterised in that** the easier deformability of the substructure (1a) comprising the teeth (2a) in the region (Ri) lying further radially inward is achieved by a suitable shaping and thus by a lower rigidity of this region or by a lower strength, more especially hardness of the substructure (1a) comprising the teeth in the region (Ri) lying further radially inward compared to the rigidity or strength respectively as considered in a region (Ra) lying further radially outward.

3. A wheel hub rotary joint arrangement according to either one of the preceding claims, **characterised in that** the different strength is achieved by soft annealing of the region (Ri) lying further radially inward subsequent to the non-cutting shaping of the spur gearing portion (2).

4. A wheel hub rotary joint arrangement according to any one of the preceding claims, **characterised in that** the substructure (1a) comprising the teeth (2a) comprises an undercut in the region (Ri) lying further radially inward.

5. A wheel hub rotary joint arrangement according to any one of the preceding claims, wherein the rigidity of the substructure (1a) comprising the teeth (2a), said rigidity being different in the radial direction (R), is achieved in that the teeth (2a) of the spur gearing portion (2) distributed over the circumference are formed such that, when joining the gearing pairing at the start of the clamping, merely a partial amount of the first teeth (2a) of the first spur gearing portion (2) come into contact with the associated teeth of the second spur gearing portion.

6. A wheel hub rotary joint arrangement according to any one of the preceding claims, comprising a double-row wheel bearing for rotatably mounting the wheel hub, with a bearing inner ring formed separately from the wheel hub and axially clamped by a shaped flange formed on the sleeve portion, wherein the constant-velocity rotary joint, in addition to the outer joint part, comprises an inner joint part and torque-transmitting balls, **characterised in that** the ratio of the axial length of the wheel bearing to the mean diameter of the spur gearing portion is equal to or greater than 0.63.

## Revendications

1. Ensemble constitué par un moyeu de roue et une articulation cylindrique ayant un axe de rotation (A) comprenant :
(a) un moyeu de roue comportant une bride permettant la connexion d'une roue et un segment de manchon destiné à recevoir un palier de roue,
(b) une articulation cylindrique homocinétique comprenant une partie d'articulation externe (1), une partie d'articulation interne et des éléments de transmission de couple,
la partie d'articulation externe (1) comportant à son extrémité tournée vers le moyeu de roue une première denture frontale (2) équipée de premières dents (2a) et le segment de manchon comportant à son extrémité tournée vers l'articulation cylindrique auto-homocinétique une seconde denture frontale équipée de secondes dents, les deux dentures frontales engrenant pour permettre la transmission du couple de rotation,
(c) des moyens de serrage permettant de serrer axialement le moyeu de roue avec la partie d'articulation externe qui s'appuient axialement d'une part sur le moyeu de roue et d'autre part, sur la partie d'articulation externe,
au moins l'une des deux surfaces frontales de la paire de dentures formée par les deux dentures frontales étant un peu bombée et ainsi réalisée de sorte que lors d'un serrage axial de l'ensemble, en considérant la direction radiale, les premières dents et les secondes dents (2a) ne viennent tout d'abord en appui les unes contre les autres que sur une petite surface partielle des surfaces des dents tournées les unes vers les autres, et que cette surface partielle augmente lors de la poursuite du serrage,
**caractérisé en ce que**
les deux surfaces frontales sont bombées de façon convexe, ou seulement l'une des surfaces frontales est bombée de façon convexe tandis que l'autre surface frontale est plane, les dentures frontales (2) étant réalisées de sorte que lors d'un serrage axial de l'ensemble, en considérant la direction radiale, les premières dents et les secondes dents (2a) viennent en appui les unes contre les autres tout d'abord radialement vers l'intérieur puis avec l'augmentation du serrage, également radialement vers l'extérieur suite à une déformation élastique, à cet effet, une structure partielle (1a) comportant les dents (2a) du segment de manchon et/ou de la partie d'articulation externe (1) étant plus facilement déformable dans la zone radiale (Rᵢ) la plus interne que dans la zone radiale (Rₐ) la plus externe.

2. Ensemble constitué par un moyeu de roue et une articulation cylindrique conforme à la revendication 1,
**caractérisé en ce que**
la faculté de déformation plus facile de la structure partielle (1a) comportant les dents (2a) dans la zone radiale (Rᵢ) la plus interne est obtenue par un formage adapté et par suite par une rigidité plus faible de cette zone ou par une résistance, en particulier une dureté plus faible de la structure partielle (1a) comportant les dents dans la zone radiale (Rᵢ) la plus interne par rapport à la rigidité ou à la résistance dans la zone radiale (Rₐ) la plus externe.

3. Ensemble constitué par un moyeu de roue et une articulation cylindrique conforme à l'une des revendications précédentes,
**caractérisé en ce que**
la solidité différente est obtenue par un recuit de la zone radiale (Rᵢ) la plus interne après le formage sans enlèvement de copeaux de la denture frontale (2).

4. Ensemble constitué par un moyeu de roue et une articulation cylindrique conforme à l'une des revendications précédentes,
**caractérisé en ce que**
la structure partielle (1a) comportant les dents (2a) comporte une contre-dépouille dans la zone radiale (Rᵢ) la plus interne.

5. Ensemble constitué par un moyeu de roue et une articulation cylindrique conforme à l'une des revendications précédentes, dans lequel la rigidité différente en direction radiale (R) de la structure partielle (1a) comportant les dents (2a) est obtenue du fait que les dents (2a) de la denture frontale (2) réparties sur sa périphérie sont réalisées de sorte que, lors de l'assemblage de la paires de dentures au début du serrage, seule une quantité partielle des premières dents (2a) de la première denture frontale (2) vienne en contact avec les dents associées de la seconde denture frontale.

6. Ensemble constitué par un moyeu de roue et une articulation cylindrique conforme à l'une des revendications précédentes, comportant un palier de roue en deux rangées permettant un montage mobile en rotation du moyeu de roue comprenant une bague de palier interne réalisée séparément du moyeu de roue qui est serrée axialement par une collerette mise en forme sur le segment de manchon, l'articulation cylindrique homocinétique comportant outre la partie d'articulation externe une partie d'articulation interne et des billes de transmission du couple,
**caractérisé en ce que**
le rapport entre la longueur axiale du palier radial et le diamètre moyen de la denture frontale est égal ou supérieur à 0,63.
